# EUROPÄISCHE PATENTSCHRIFT

(11) **EP 2 490 860 B1**
(45) Veröffentlichungstag und Bekanntmachung des Hinweises auf die Patenterteilung: **02.10.2013**
(21) Anmeldenummer: 10787678.1
(22) Anmeldetag: 21.10.2010
(51) Int. Cl.: B25B 11/00, B23Q 3/08

(54) **VORRICHTUNG ZUM AUSSTEIFEN EINES WERKSTÜCKES MITTELS EINER SPANNPLATTE, SOWIE VERFAHREN ZUM HALTEN UND BEARBEITEN EINES WERKSTÜCKES MIT SPANNPLATTE**
DEVICE FOR STIFFENING A WORKPIECE BY MEANS OF A CLAMPING PLATE, AND METHOD FOR RETAINING AND PROCESSING A WORKPIECE HAVING A CLAMPING PLATE
DISPOSITIF POUR RIGIDIFIER UNE PIÈCE À L'AIDE D'UNE PLAQUE DE FIXATION, ET PROCÉDÉ DE RETENUE ET D'USINAGE D'UNE PIÈCE DOTÉE D'UNE PLAQUE DE FIXATION

(30) Priorität: 21.10.2009 DE 102009044305
(43) Veröffentlichungstag der Anmeldung: 29.08.2012
(73) Patentinhaber: Fooke GmbH, 46325 Borken (DE)
(72) Erfinder: JACOB, Thomas, 46325 Borken (DE); PIERICK, Hans-Jürgen, 48734 Reken (DE); LÖTTERT, Richard, 46342 Velen (DE)
(74) Vertreter: Habbel, Ludwig
(86) Internationale Anmeldenummer: PCT/DE2010/001236
(87) Internationale Veröffentlichungsnummer: WO 2011/047670

(56) Entgegenhaltungen:
- EP-A1- 0 429 901
- EP-A2- 1 514 638
- DE-A1- 2 018 605
- DE-A1- 19 714 873
- US-A- 3 720 433

## Beschreibung

Die Erfindung betrifft eine Vorrichtung zum Aussteifen eines großflächigen, dünnen Werkstücks mit geringer Eigensteifigkeit.

Beispielsweise bei der Bearbeitung von großflächigen dünnen Aluminiumblechen besteht der Wunsch, aus Gründen der Gewichtseinsparung Bereiche dieser Werkstücke spanabhebend zu bearbeiten, beispielsweise die Schichtdicke bereichsweise durch Fräsen zu reduzieren. Derartige Anforderungen bestehen beispielsweise im Bereich des Flugzeugbaus. Um eine hohe Bearbeitungsgenauigkeit einzuhalten und unerwünschte Schwächungen der Bauteile durch einen zu hohen Materialabtrag zu vermeiden, besteht die Anforderung, das spanabhebende Werkzeug, beispielsweise einen Fräskopf, möglichst exakt zu führen, wobei dementsprechend auch die Lage des Werkstücks dementsprechend präzise sichergestellt sein muss. Nachgiebigkeiten des Werkstücks würden dazu führen, dass das Werkstück unter dem Bearbeitungsdruck dem Werkzeug ausweicht und somit nicht ausreichend bearbeitet würde. Um solche Nachgiebigkeiten des Werkstücks zu vermeiden, ist vorgesehen, die Werkstücke einzuspannen und durch die Spannmittel auszusteifen.

So ist es beispielsweise aus der Praxis bekannt, sogenannte Spanntische zu verwenden, die mit einer Vielzahl matrixartig angeordneter Aktuatoren versehen ist. Die Aktuatoren weisen an ihrem freien Ende üblicherweise Saugeinrichtungen auf, mit denen sie das Werkstück halten und fixieren können. Die Aktuatoren sind individuell verstellbar, also der Saugkopf eines jeden Aktuators unabhängig von den anderen Aktuatoren in der Höhe und in der Neigung verstellbar, so dass ein gesamtes Feld von Aktuatoren der Sollkontur des Werkstücks entsprechend ausgerichtet werden kann. Derartige Spanntische sind vergleichsweise teuer, da jeder einzelne Aktuator mehr als 1.000,00 Euro kosten kann und die Aktuatoren möglichst eng gesetzt werden sollten, um eine optimale Unterstützung des Werkstückes zu gewährleisten. In der Praxis ist dennoch immer wieder zu beobachten, dass zwischen den Aktuatoren das dünnwandige Werkstück ausbeult, also dem Bearbeitungswerkzeug nachgibt, so dass an diesen Stellen entweder keine vollständige Bearbeitung des Werkstücks erfolgt oder nur mit einem sehr hohen apparativen und messtechnischen Aufwand die vollständige Bearbeitung des Werkstücks durch dessen entsprechende Nachführung gewährleistet werden kann.

Aus der DE 197 14 873 A1 ist eine Vorrichtung zum Fixieren von Gegenständen bekannt, die zum Abstützen wenigstens eines Gegenstandes einen kissenartigen Stützkörper aufweist, der eine mit körnigem Material gefüllte, belüft- und evakuierbare, flexible Hülle aufweist.

Aus der DE 20 18 605 A1 ist eine ähnlich ausgestaltete Stützanordnung zum Ruhigstellen im orthopädischen Bereich bekannt, die leicht, tragbar zusammenlegbar und versteifbar sein soll.

Aus der EP 1 514 638 A2 ist ein Verfahren und eine Anordnung zum Bearbeiten eines in einer Spannvorrichtung eingespannten Werkstückes bekannt.

Der Erfindung liegt die Aufgabe zugrunde, eine Vorrichtung zum Aussteifen eines großflächigen dünnen Werkstückes geringer Eigensteifigkeit zu schaffen, welches eine hervorragende Unterstützung des Werkstücks bietet und wirtschaftlich herstellbar ist.

Diese Aufgabe wird durch eine Vorrichtung mit den Merkmalen des Anspruchs 1 gelöst.

Die Erfindung schlägt mit anderen Worten vor, eine biegsame Platte zu verwenden. Die Biegsamkeit wird dadurch erreicht, dass die Platte von Luftkanälen durchzogen ist, die sich jeweils durch die Kontaktschicht und in die Zwischenschicht erstrecken, so dass diese Schichten verformbar sind und dementsprechend eine problemlose Anpassbarkeit der Platte an die vergleichsweise großen Radien der großflächigen Werkstücke problemlos möglich ist. Die vorschlagsgemäße Spannplatte ist dabei wenigstens dreischichtig aufgebaut: Die erwähnte Kontaktschicht ist dem Werkstück benachbart, wobei diese Kontaktschicht die Kontaktfläche der Spannplatte bildet, mit welcher Kontaktfläche die Spannplatte dem Werkstück anliegt. Die erwähnten Luftkanäle sind vorschlagsgemäß in Form von sich kreuzenden Nuten ausgestaltet, so dass eine Biegsamkeit der Spannplatte in zwei Richtungen ermöglicht wird. Damit ist es möglich, die Spannplatte auch sphärisch gekrümmten Werkstücken anzulegen.

Auf der gegenüberliegenden, rückwärtigen, also vom Werkstück abgewandten Seite weist die Spannplatte eine Rückenschicht auf. Während die Kontaktschicht durch die Luftkanäle in eine Vielzahl einzelner Segmente unterteilt ist, kann die Rückenschicht ununterbrochen sein, so dass sie einerseits zur Stabilität der Spannplatte maßgeblich beiträgt, und insbesondere eine geschlossene Oberfläche bereitstellt, die es beispielsweise ermöglicht, die Spannplatte auf das vorerwähnte Aktuatorenfeld eines Spanntisches aufzuspannen. Die geschlossene Ausgestaltung der Rückenschicht ermöglicht dabei die Festlegung der Spannplatte an den Saugern der Aktuatoren mittels Unterdruck.

Bei vorhandenen Spanntischen kann daher mit Hilfe der vorschlagsgemäßen Spannplatte problemlos und vergleichsweise kostengünstig eine sehr viel genauere und präzisere Halterung des Werkstücks erfolgen, da im Bearbeitungsbereich eine nahezu vollständige, unterbrechungsfreie Unterstützung des Werkstückes ermöglicht wird, selbst wenn die einzelnen Aktuatoren mit vergleichsweise großen Abständen zueinander angeordnet sind. Die Aktuatoren können mit ihren Saugern die Rückenschicht der Spannplatte zuverlässig halten, so dass lediglich die Schichtdicke der Spannplatte bei der Bearbeitung des Werkstücks berücksichtigt und mit einbezogen werden muss, ansonsten die Bearbeitung des Werkstücks auf dem mit Aktuatoren versehenen Spanntisch nahezu unverändert wie bislang üblich erfolgen kann. Dabei weist die Bearbeitung jedoch den Vorteil erheblich höherer Genauigkeit auf, da in den Zwischenräumen zwischen den Aktuatoren das Ausbeulen des Werkstücks, also dessen Nachgiebigkeit angesichts des durch das Werkzeug aufgebrachten Anpressdrucks, ausgeschlossen oder zumindest sehr stark reduziert wird.

Die vorschlagsgemäße Spannplatte weist ihrerseits Haltemittel zur Festlegung der Spannplatte am Werkstück auf. Dabei ist vorgesehen, das Werkstück mittels Unterdruck an der Spannplatte zu halten. Die Kontaktschicht weist daher Durchbrüche, Öffnungen, Nuten oder dergleichen auf, so dass durch die Luftkanäle Luft gesaugt werden kann und an der Kontaktfläche der Spannplatte ein Unterdruck angelegt werden kann, der das Werkstück an der Spannplatte festlegt. Dementsprechend wird ein sogenannter Haltebereich geschaffen, der dadurch definiert ist, dass er von einer umlaufenden Dichtung umgeben ist, wobei innerhalb dieses Haltebereichs ein Sauganschluss vorgesehen ist, so dass dieser Haltebereich evakuierbar ist, wenn die Spannplatte und insbesondere deren Dichtung dem Werkstück anliegt. Die Evakuierung des Haltebereichs ermöglicht nicht nur die Festlegung der Spannplatte an dem Werkstück, sondern bewirkt zusätzlich eine verbesserte Steifigkeit des Verbundes, der aus der zunächst flexiblen Spannplatte und dem Werkstück gebildet ist.

Die Dichtung kann ausschließlich als umlaufende, den Haltebereich zirkumferent begrenzende Dichtung ausgestaltet sein. Die Dichtung erstreckt sich bis zur Kontaktfläche der Kontaktschicht, so dass sie dort dem Werkstück abdichtend anliegt.

Wenn beispielsweise das Werkstück größer ist als die Spannplatte, kann die Dichtung außen am Rand der Spannplatte umlaufend angeordnet sein. Wenn das Werkstück jedoch kleiner ist als die Spannplatte, kann vorgesehen sein, dass die Dichtung in einer Nut verläuft, die als geschlossener Ring verläuft. Dieser Ring kann eine beliebiger Kontur aufweisen, die vorteilhaft an die Form des Werkstücks angepasster sein kann.

Um jedoch nicht für verschiedene derartig kleine Werkstücke stets eigens angepasste Spannplatten mit speziellen Dichtungskonturen bereitstellen zu müssen, kann die Dichtung vorteilhaft zweiteilig ausgestaltet sein: eine umlaufende Randdichtung begrenzt den Haltebereich zirkumferent. Dabei kann vorteilhaft die maximale Fläche der Spannplatte nutzbar gemacht werden, indem die Dichtung außen am Rand der Spannplatte umläuft. Die durch das Werkstück nicht abgedeckte Fläche der Kontaktschicht wird mittels einer Flächendichtung abgedeckt, so dass hier kein Vakuum-Leck entstehen kann. Die Flächendichtung kann beispielsweise in Form einer Gummimatte oder eines Tuchs mit einer gummiartigen Beschichtung ausgestaltet sein. Unterschiedliche Werkstücke erfordern also lediglich unterschiedliche Flächendichtungen.

Zwischen der Kontaktschicht und der Rückenschicht ist eine möglichst leichtgewichtige Zwischenschicht vorgesehen, in welche sich die in der Kontaktschicht vorgesehenen Nuten auch noch erstrecken, um so die Biegsamkeit der Spannplatte zu verbessern.

Diese Zwischenschicht kann vorteilhaft eine Vielzahl von Hohlräumen aufweisen, um auf diese Weise einen möglichst leichtgewichtigen Aufbau der gesamten Spannplatte zu ermöglichen. In dem Fall, dass die Luftkanäle durch sich kreuzende Nuten gebildet sind, können die Hohlräume vorteilhaft geschlossenzellig ausgestaltet sein. Wenn Hohlräume durch das Einbringen der sich kreuzenden Nuten in die Spannplatte angeschnitten werden, verhindert die geschlossenzellige Ausgestaltung dieser Hohlräume, dass eine nahezu unbegrenzte Leckage entsteht. Durch die geschlossenzellig ausgestalteten Hohlräume wird vielmehr die Evakuierbarkeit des Haltebereichs der Spannplatte nicht beeinträchtigt.

Wenn die Zwischenschicht als Wabenplatte ausgestaltet ist, wird eine vorteilhafte Kombination der Eigenschaften "geringes Gewicht" und "Steifigkeit" ermöglicht. Je nach verwendetem Material für die Waben kann vorgesehen sein, die Biegsamkeit der Wabenplatte durch Schlitze oder Nuten zu verbessern, die beispielsweise in einem Kreuzmuster in die Wabenplatte eingebracht werden. Dies kann beispielsweise bei metallischen Waben vorgesehen sein. Andere Materialien wie beispielsweise Papier oder papierähnliche Werkstoffe können bereits in sich eine ausreichende Biegsamkeit aufweisen, um die gewünschte Anpassung der Spannplatte an die Werkstückkonturen zu ermöglichen. Dabei ist zu berücksichtigen, dass häufig vergleichsweise große Biegeradien mit entsprechend lediglich geringer Krümmung vorgesehen sind, wie dies am Beispiel der Flugzeugindustrie und der dort vorhandenen Werkstücke erläutert wurde.

Die Waben von vorschlagsgemäß verwendbaren Wabenplatten können sehr unterschiedliche Zellenformen bzw. Wabenformen aufweisen, mit beispielsweise rechteckigen, sechseckigen oder Omega-förmigen Grundrissen.

Wenn auch die Kontaktschicht durch eine Wabenplatte gebildet ist, wie dies weiter oben erwähnt wurde, kann vorteilhaft vorgesehen sein, dass die Waben der Kontaktschicht an der Kontaktfläche mit einem Dichtungswerkstoff beschichtet sind. Beispielsweise kann die Wabenplatte in einen entsprechenden flüssigen Dichtungswerkstoff eingetaucht werden, so dass etwa 1 bis 2 mm weit die Zellenwände der Waben mit dem Dichtungswerkstoff versehen werden. Nach Austrocknen bzw. Härten dieses Dichtungswerkstoffs kann die Wabenplatte als Kontaktschicht einer Spannplatte an ein Werkstück angelegt werden, und die dichtungswirksam ausgestalteten Ränder der Zellenwände bewirken, dass beim Anlegen eines Unterdrucks das Werkstück zuverlässig an dieser Wabenplatte gehalten wird und Leckagen vermieden sind.

Vorteilhaft kann die Spannplatte eine ferromagnetische Schicht aufweisen. Diese kann ggf. dazu dienen, die Spannplatte an dem zu bearbeitenden Werkstück zu halten und provisorisch zu fixieren, bevor die eigentlichen Haltemittel einen sicheren Halt der Spannplatte am Werkstück sicherstellen. In der überwiegenden Vielzahl der in der Praxis vorkommenden Bearbeitungsfälle wird die ferromagnetische Schicht allerdings nicht für einen provisorischen Halt nutzbar sein, weil die zu bearbeitenden Werkstücke nicht ihrerseits ferromagnetisch sind, wie z. B. bei Materialien wie CFK und Aluminium. Die ferromagnetische Schicht kann daher insbesondere vorgesehen sein, um ein Reflexionsschicht zu schaffen, die zur Bestimmung der Werkstückdicke an der jeweils zu bearbeitenden Stelle genutzt werden kann:

In der Praxis besteht nämlich das Problem, dass die Materialstärke des Werkstücks nicht ideal konstant ist. Wenn beispielsweise ein metallisches Werkstück über einer Form gezogen wird, um eine gewünschte Kontur anzunehmen, so kann allein durch diesen Formvorgang das Material des Werkstücks zu fließen beginnen, so dass letztlich bereichsweise unterschiedliche Materialstärken des Werkstücks resultieren. Wenn nun eine bereichsweise Bearbeitung des Werkstückes erfolgen soll und die verbleibende Materialstärke des Werkstücks definiert ist, so muss sich die Bearbeitungstiefe bereichsweise entlang dem Werkstück unterscheiden, nämlich in Abhängigkeit von der Ausgangsmaterialstärke, die das Werkstück an der jeweiligen Bearbeitungsstelle aufweist. Daher kann vorteilhaft vorgesehen werden, an der zu bearbeitenden Stelle die Schichtdicke des Werkstücks zerstörungsfrei zu ermitteln, beispielsweise mittels einer Ultraschallmessung. Zu diesem Zweck kann die ferromagnetische Schicht der Spannplatte als Reflexionsfläche genutzt werden, um klare und eindeutige Messwerte bei der Ultraschallmessung zu erhalten.

Grundsätzlich kann die ferromagnetische Schicht irgendwo in der Spannplatte vorgesehen sein; denn der entsprechende Abstand von der Kontaktfläche, also von der Außenseite des zu bearbeitenden Werkstücks, kann rechnerisch berücksichtigt werden. Besonders vorteilhaft kann allerdings die Kontaktschicht, welche die dem Werkstück anliegende Kontaktfläche bildet, ferromagnetisch ausgestaltet sein, so dass die Kontaktfläche auch gleichzeitig die Reflexionsfläche für die Ultraschallwellen bildet und die tatsächliche Grenze des Werkstücks repräsentiert. Auf diese Weise wird eine möglichst direkte Messung ermöglicht und evtl. auftretenden Ungenauigkeiten, die ansonsten durch den Abstand der Reflexionsfläche vom Werkstück auftreten könnten, werden auf diese Weise zuverlässig ausgeschlossen.

Eine möglichst flexible Ausgestaltung der Spannplatte kann vorteilhaft dadurch bewirkt werden, dass die von Luftkanälen freie Schichtdicke der Spannplatte möglichst gering gehalten wird. Daher kann vorteilhaft vorgesehen sein, dass sich die Luftkanäle nicht nur durch die Kontaktschicht, sondern auch vollständig durch die Zwischenschicht erstrecken, also bis an die Rückschicht heran.

Je nach Ausgestaltung des Werkstückes können unterschiedliche Vorgehensweisen bei der Bearbeitung des Werkstücks vorgesehen werden: Einerseits kann vorgesehen sein, dass die Spannplatte zunächst in eine Form gebracht wird, welche der Sollkontur des Werkstücks entspricht. So kann beispielsweise vorgesehen sein, in an sich bekannter Weise die Aktuatoren eines Spanntisches entsprechend auszurichten, so dass die auf den Aktuatoren aufliegende Spannplatte entlang ihrer Kontaktfläche die gewünschte Werkstückaußenkontur aufweist. Anschließend wird nun das dünne, nicht formstabile Werkstück auf die Spannplatte aufgelegt und durch die an der Spannplatte vorgesehenen Haltemittel an der Spannplatte festgelegt.

Die Aktuatoren können in an sich bekannter Weise in Art einer Punktmatrix über die Fläche des Spanntisches verteilt angeordnet sein. Sie sind einzeln höhenverstellbar und können somit nahezu beliebigen Konturen in Form von Oberflächenverläufen angepasst werden. Beispielsweise im Flugzeugbau sind immer häufiger die Außenflächen des Rumpfes und des Tragwerks in Form so genannter Freiformflächen gestaltet, die eine komplexere Oberflächengeometrie aufweisen als Standardflächen wie z. B. eine plane Ebene oder die Oberfläche einer Kugel, eines Kegels oder eines Zylinders. An derartige Freiformflächen lassen sich die Aktuatoren des Spanntisches problemlos anpassen, indem die einzelnen Aktuatoren individuell jeweils auf das erforderliche Höhenmaß eingestellt werden. Bei dieser Anpassung wird die An ihren freien Enden weisen sie Halterungen auf, beispielsweise Unterdrucksauger, so dass die vorschlagsgemäße, verformbare Spannplatte an den Aktuatoren fixiert werden kann. Ein Feinjustage der Aktuatoren kann dann den Oberflächenverlauf der Spannplatte in exakte Übereinstimmung mit der gewünschten Sollkontur des Werkstücks bringen. Wenn das Werkstück anschließend an die Spannplatte angelegt und festgelegt wird, nimmt es die Sollkontur an.

Alternativ zu dieser Vorgehensweise kann vorgesehen sein, das Werkstück so zu lagern, dass es seine Sollkontur an der äußeren Oberfläche aufweist. Anschließend wird die Spannplatte an das Werkstück angelegt, wobei sich die Kontur der Spannplatte der Werkstückkontur anpasst. Nun wird das Werkstück mit den an der Spannplatte vorgesehenen Haltemitteln mit der Spannplatte verbunden, so dass nun das Werkstück und die Spannplatte unter Beibehaltung der Werkstückkontur bewegt werden können.

Diese Beweglichkeit kann insbesondere auch dann genutzt werden, wenn die Spannplatte gar nicht zum Bearbeiten des Werkstücks als eine Hilfsvorrichtung dienen soll, sondern wenn der Einsatz dieser Spannplatte ausschließlich auf den Transport des Werkstücks gerichtet ist: Bei dem Transport großflächiger Werkstücke, beispielsweise im Bereich des Flugzeugbaus, kommen üblicherweise speziell an die Werkstückkontur angepasste Tragvorrichtungen zum Einsatz, beispielsweise entsprechend der Werkstückkontur gefertigte Sauger. Mit Hilfe der vorschlagsgemäßen Spannplatte kann eine Vielzahl unterschiedlicher, speziell an ein bestimmtes Werkstück angepasst geformter Sauger durch die Spannplatte ersetzt werden, so dass eine Art Universaltrageinrichtung geschaffen wird, die nicht nur Werkstücktoleranzen mehrerer an sich gleicher Werkstücke auszugleichen vermag, sondern die auch zum Transport unterschiedlicher Werkstücke mit unterschiedlichen Sollkonturen genutzt werden kann. Auf diese Weise wird der wirtschaftliche Aufwand sowie der bereitzustellende Lagerraum für die Bereitstellung einer Vielzahl unterschiedlich ausgestalteter, an die jeweiligen Werkstücke speziell angepasster Sauger erheblich verringert.

Ausführungsbeispiele vorschlagsgemäßer Spannplatten werden anhand der rein schematischen Darstellung nachfolgend näher erläutert. Dabei zeigt
- Fig. 1: eine perspektivische, teilweise weggebrochene Ansicht auf ein erstes Ausführungsbeispiel einer Spannplatte,
- Fig. 2: einen Querschnitt durch die Spannplatte von Fig. 1, und
- Fig. 3: einen Querschnitt durch ein zweites Ausführungsbeispiel einer Spannplatte samt darauf befindlichem Werkstück.

In den Zeichnungen ist mit 1 insgesamt eine Spannplatte bezeichnet, die aus drei Schichten besteht: Eine unten dargestellte sogenannte Rückenschicht 2 ist als einteilige, ununterbrochene Schicht dargestellt, welche die eine Oberfläche einer Sandwichplatte bildet. Die gegenüberliegende Oberfläche der Sandwichplatte ist als Kontaktschicht 3 bezeichnet, welche dem Werkstück angelegt wird. Zwischen der Rückenschicht 2 und der Kontaktschicht 3 befindet sich eine Zwischenschicht 6, die bei den beiden dargestellten Ausführungsbeispielen als Wabenstruktur ausgestaltet ist.

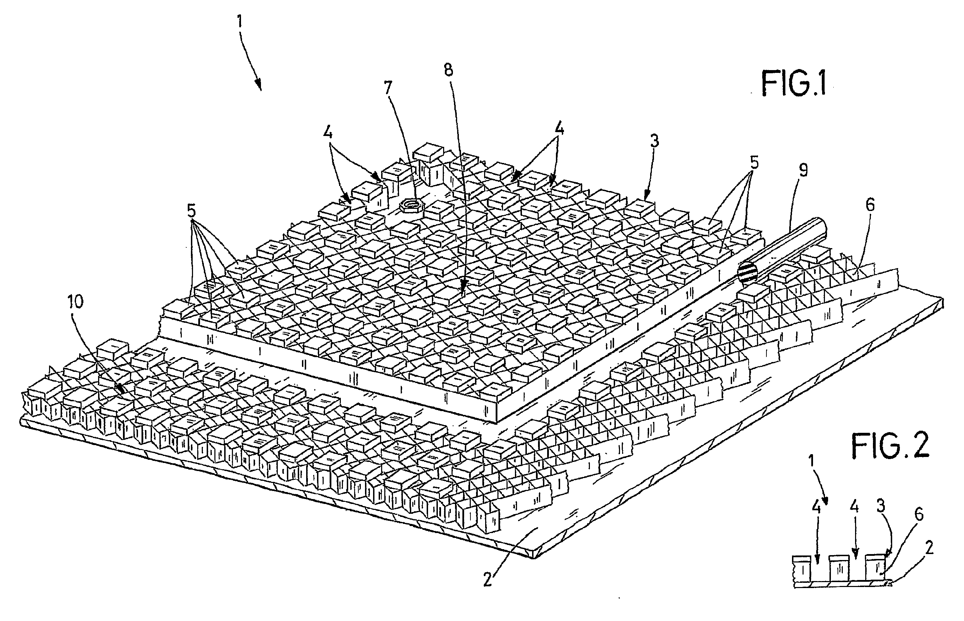

Bei dem Ausführungsbeispiel der Fig. 1 und 2 ist diese Kontaktschicht 3 durch in die Spannplatte 1 eingefräste, sich kreuzende Nuten 4 in eine Vielzahl von einzelnen Segmenten 5 aufgeteilt. Die freie Oberfläche dieser Segmente 5 bildet die Kontaktfläche der Kontaktschicht 3, also die Oberfläche der Spannplatte 1, welche in Kontakt mit dem Werkstück gerät, wenn die Spannplatte 1 dem Werkstück angelegt wird.

Bei dem Ausführungsbeispiel der Fig. 1 und 2 ist aus Gründen der zeichnerischen Einfachheit die Zwischenschicht 6 stets mit gleicher Schichtdicke über die gesamte Plattenfläche hinweg dargestellt. Tatsächlich jedoch erstrecken sich die Nuten 4, wie aus Fig. 2 deutlicher hervorgeht, nicht nur durch die Kontaktschicht 3, sondern auch in die Zwischenschicht 6 hinein, so dass die Schichtdicke der Wabenstruktur im Bereich der Nuten 3 reduziert ist. Insbesondere ist bei dem in Fig. 2 dargestellten Ausführungsbeispiel vorgesehen, dass sich die Nuten 4 durch die gesamte Zwischenschicht 6 bis zur Rückenschicht 2 erstrecken. Die Zwischenschicht 6 ist also beispielsweise im Bereich der Nuten 4 vollständig weggefräst worden, so dass auf diese Weise die Beweglichkeit und Verformbarkeit der Spannplatte 1 optimiert ist.

Durch die eigene Flexibilität kann die Spannplatte 1 mit ihrer Kontaktschicht 3 an die äußere Kontur des Werkstücks angepasst werden. Den sicheren Halt des Werkstücks an der Spannplatte 1 ermöglichen Haltemittel der Spannplatte 1, die bei dem darstellten Ausführungsbeispiel als Saugeinrichtung ausgestaltet sind:

Eine in der Rückenschicht 2 vorgesehener Sauganschluss 7 kann beispielsweise als Stutzen ausgestaltet sein, der über die Spannplatte 1 hinaus nach hinten ragt, so dass eine entsprechende Saugleitung an diesen Sauganschluss 7 angeschlossen werden kann. Der Sauganschluss 7 mündet in einem als Haltebereich 8 bezeichneten Bereich der Spannplatte 1, der von einer um den Haltebereich 8 umlaufenden Dichtung 9 begrenzt wird. Der Anteil der Spannplatte 1, der sich außerhalb der Dichtung 9 befindet; ist dementsprechend als freier Bereich 10 bezeichnet, da er nicht durch die Haltemittel an dem Werkstück gehalten ist. Dieser freie Bereich 10 kann gleichwohl zur Abstützung des Werkstückes bei dessen Bearbeitung dienen: Beispielsweise wenn die Spannplatte 1 mit ihrer Rückenschicht 2 an den Saugern einer Vielzahl von Aktuatoren eines Spanntisches befestigt ist und das Werkstück auf der Spannplatte 1 aufliegt, kann eine Unterstützung des Werkstückes auch durch den freien Bereich 10 gewährleistet werden, um beispielsweise zu verhindern, dass das Werkstück ausbeult und angesichts der Krafteinwirkung durch das Werkzeug, beispielsweise ein Fräskopf, zwischen zwei Aktuatoren nachgibt.

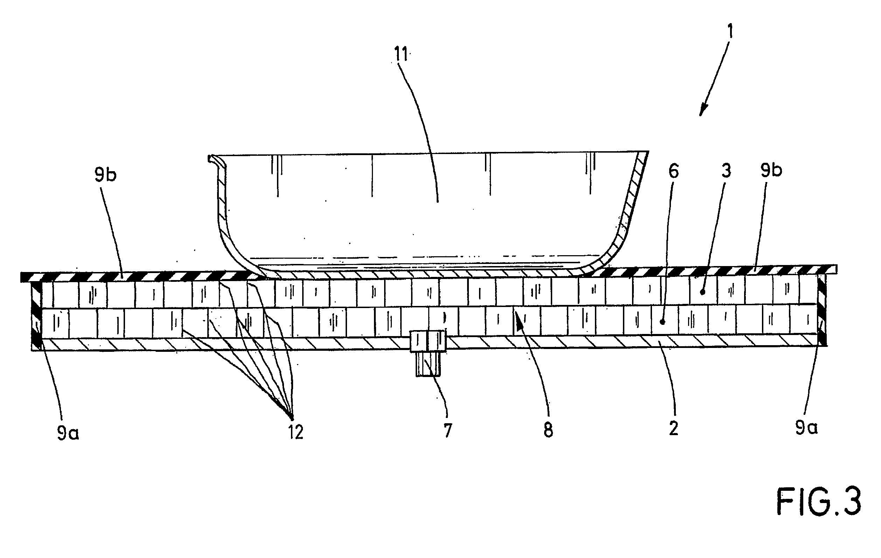

Bei dem Ausführungsbeispiel der Fig. 3 ist ein Werkstück 11 dargestellt, an welches die Spannplatte 1 angelegt ist. Sowohl die Kontaktschicht 3 als auch die Zwischenschicht 6 sind jeweils in Form einer Wabenplatte ausgestaltet. Dabei ist ersichtlich, dass Zellwände 12 der beiden Wabenplatten nicht genau miteinander fluchten, so dass sich Luftkanäle ergeben, die vom Sauganschluss 7 bis zur Oberfläche der Kontaktschicht 3, also bis zum Werkstück 11, eine Luftströmung ermöglichen und so das Anlegen eines Unterdrucks ermöglichen, um das Werkstück 11 an der Spannplatte 1 festzulegen.

Bei dem Ausführungsbeispiel der Fig. 3 ist die Dichtung 9 zweiteilig ausgestaltet, da das Werkstück 11 kleiner ist als die Spannplatte und demzufolge die Oberfläche der Kontaktschicht 3 nicht vollständig abdeckt. Eine am Rand der Spannplatte 1 umlaufende Randdichtung 9a verhindert Leckagen an den Rändern der Wabenplatten, also an den Rändern der Kontaktschicht 3 und der Zwischenschicht 6. Eine Flächendichtung 9b in Form einer Gummimatte umgibt das Werkstück 11 und liegt der Kontaktfläche der Kontaktschicht 3 an, so dass auch an der Oberfläche der Spannplatte 1 keine Leckage und somit kein Verlust des angelegten Unterdrucks auftreten kann.

## Patentansprüche

1. Vorrichtung zum Aussteifen eines großflächigen, dünnen Werkstücks, (11) geringer Eigensteifigkeit,
mit einem als Spannplatte Spannelement ausgestaltetem, das wenigstens die drei folgen-den Schichten aufweist:
eine Kontaktschicht (3), die eine dem Werkstück (11) anlegbare Kontaktfläche aufweist,
eine gegenüberliegende biegsame Rückenschicht (2), und eine zwischen der Kontaktschicht (3) und der Rückenschicht (2) angeordnete, leichtgewichtige Zwischenschicht (6),
und eine Vielzahl von Luftkanälen, die sich jeweils durch die Kontaktschicht (3) und in die Zwischenschicht (6) erstrecken, wobei die Luftkanäle in Form von sich schneidenden Nuten (4) ausgestaltet sind,
und mit wenigstens einem als Sauger ausgestalteten Haltemittel zur Festlegung des Spannelements am Werkstück (11),
wobei ein Sauganschluss (7) vorgesehen ist, der an eine Vakuumpumpe anschließbar ist, derart, dass vom Sauganschluss (7) ausgehend und durch die Luftkanäle ein dem Werkstück (11) anliegender so genannter Haltebereich (8) evakuierbar ist,
wobei der Haltebereich (8) mittels einer Dichtung (9) begrenzt ist, welche die Ausbreitung des Vakuums begrenzend den Haltebereich (8) umgibt und sich wenigstens bis zur Kontaktfläche, dem Werkstück (11) anlegbar, erstreckt.

2. Vorrichtung nach Anspruch 1, **dadurch gekennzeichnet, dass** die Dichtung (9) mehrteilig ausgestaltet ist und eine umlaufende Randdichtung (9a) aufweist, welche den Haltebereich (8) zirkumferent begrenzt, sowie eine Flächendichtung (9b), welche an der Kontaktfläche der Kontaktschicht (3) vorgesehen ist und sich wenigstens bis zu der Randdichtung (9a) erstreckt.

3. Vorrichtung nach Anspruch 2, **dadurch gekennzeichnet, dass** die Flächendichtung (9b) die Kontaktfläche der Kontaktschicht (3) außerhalb des Werkstücks (11) luftdicht abdeckt.

4. Vorrichtung nach Anspruch 1, **dadurch gekennzeichnet, dass** die Zwischenschicht (6) eine Vielzahl von Hohlräumen aufweist.

5. Vorrichtung nach Anspruch 4, **dadurch gekennzeichnet, dass** die Hohlräume geschlossenzellig ausgestaltet sind.

6. Vorrichtung nach einem der vorhergehenden Ansprüche, **gekennzeichnet durch** eine ferromagnetische Schicht.

7. Vorrichtung nach Anspruch 6, **dadurch gekennzeichnet, dass** die Kontaktschicht (3) ferromagnetisch ausgestaltet ist.

8. Vorrichtung nach Anspruch 1, **dadurch gekennzeichnet, dass** sich die Nuten (4) bis an die Rückenschicht (2) durch die Zwischenschicht (6) erstrecken.

9. Vorrichtung nach einem der vorhergehenden Ansprüche, **gekennzeichnet durch**
einen Spanntisch, welcher mit mehreren höhenverstellbaren Aktuatoren bestückt ist,
wobei die Spannplatte (1) den Aktuatoren anliegt und an den Aktuatoren gehalten ist,
und wobei die Aktuatoren individuell höhenverstellbar sind,
derart, dass die Aktuatoren der Sollkontur des Werkstücks (11) entsprechend ausrichtbar sind.

10. Verfahren zum Halten eines Werkstücks, **dadurch gekennzeichnet, dass** eine Vorrichtung (1) nach einem der Ansprüche 1 bis 8 mit ihrer Rückenschicht (2) einer Mehrzahl von Aktuatoren eines Spanntisches angelegt wird, und dass der Sollkontur des Werkstücks (11) entsprechend die Aktuatoren ausgerichtet werden,
und dass das Werkstück (11) an die Kontaktfläche (3) der Spannplatte (1) angelegt und durch die Haltemittel der Vorrichtung gehalten wird.

11. Verfahren zum Halten eines Werkstücks, wobei eine Vorrichtung nach einem der Ansprüche 1-8 an die Kontur des Werkstücks (11) angepasst und dem Werkstück (11) angelegt wird, und mittels der Haltemittel an dem Werkstück (11) festgelegt wird,
und anschließend das Werkstück (11) und die Vorrichtung gemeinsam gehandhabt werden
und das Werkstück (11) zusammen mit der Vorrichtung (1) gemeinsam transportiert wird.

12. Verfahren zum Bearbeiten eines Werkstücks, **dadurch gekennzeichnet, dass** das Werkstück (11) mit einer nach Anspruch 6 oder 7 ausgestalteten Vorrichtung verbunden wird, und dass die Schichtdicke des Werkstücks (11) an einer zu bearbeitenden Stelle durch Ultraschallmessung ermittelt wird, wobei die ferromagnetische Schicht der Spannplatte (1) als Reflexionsschicht für den Ultraschall genutzt wird.

## Claims

1. Device for stiffening a thin large-surface workpiece (11) of low intrinsic rigidity with a clamping element in form of a clamping plate comprising at least the following three layers:
a contact layer (3) having a contact surface which lies against the workpiece (11),
a pliable opposing backing layer (2),
and a lightweight intermediate layer (6) arranged between the contact layer (3) and the backing layer (2),
and a large number of air ducts extending through the contact layer (3) into the intermediate layer (6), where the air ducts are formed as mutually intersecting grooves (4)
and with at least one retaining means in form of a suction device for fixing the clamping element to the workpiece (11),
where a suction connection (7) is provided which can be connected to a vacuum pump in such a way that a so-called retaining area (8) placed against the workpiece (11) can be evacuated through the suction connection (7) and the air ducts,
where the retaining area (8) is delimited by means of a seal (9) which limits the spread of the vacuum, surrounds the retaining area (8), extends at least to the contact surface, and can be placed against the workpiece (11).

2. Device in accordance with claim 1, **characterised in that** the seal (9) is formed in several parts, and has an edge seal (9a) which delimits the circumference of the retaining area (8) and a surface seal (9b) provided on the contact surface of the contact layer (3) and extends at least as far as the edge seal (9a).

3. Device in accordance with claim 2, **characterised in that** the surface seal (9b) covers the contact surface of the contact layer (3) outside the workpiece (11) in such a way that it is airtight.

4. Device in accordance with claim 1, **characterised in that** the intermediate layer (6) has a large number of cavities.

5. Device in accordance with claim 4, **characterised in that** the cavities are formed as closed cells.

6. Device in accordance with any of the above claims, **characterised by** a ferromagnetic layer.

7. Device in accordance with claim 6, **characterised in that** the contact layer (3) is formed as a ferromagnetic layer.

8. Device in accordance with claim 1, **characterised in that** the grooves (4) extend through the intermediate layer (6) to the backing layer (2).

9. Device in accordance with any of the above claims, **characterised by** a clamping table which is fitted with several actuators which are adjustable in height,
where the clamping plate (1) lies against the actuators and is held against the actuators,
and where the actuators are individually adjustable in height,
in such a way that the actuators can be aligned in accordance with the intended contour of the workpiece (11).

10. Process for holding a workpiece, **characterised in that** a device (1) in accordance with one of the claims 1 to 8 is placed with its backing layer (2) against a number of actuators on a clamping table and that the actuators are aligned according to the intended contour of the workpiece (11),
and that the workpiece (11) is placed against the contact surface (3) of the clamping plate (1) and is held in place by the retaining means of the device.

11. Process for holding a workpiece, where a device in accordance with one of the claims 1 to 8 is adapted to the contour of the workpiece (11), is placed against the workpiece (11), and is fixed in place on the workpiece (11) by the retaining means,
and then the workpiece (11) and the device are handled together and the workpiece (11) is transported jointly with the device.

12. Process for machining a workpiece, **characterised in that** the workpiece (11) is connected to a device designed in accordance with claim 6 or 7 and that the layer thickness of the workpiece (11) at a place to be machined is determined by ultra-sonic means, where the ferromagnetic layer of the clamping plate (1) serves as a reflective layer for the ultrasonic waves.

## Revendications

1. Dispositif pour rigidifier une pièce mince (11) de grande surface présentant une faible rigidité propre, avec un élément de serrage configuré en forme de plaque de serrage, élément qui présente au moins les trois couches suivantes :
une couche de contact (3) présentant une surface de contact qu'il est possible d'appliquer contre la pièce (11),
une couche dorsale (2) flexible située en face,
et une couche intercalaire (6) de faible poids agencée entre la couche de contact (3) et la couche dorsale (2),
et un grand nombre de canaux de passage d'air qui s'étendent respectivement à travers la couche de contact (3) et la couche intercalaire (6), sachant que les canaux de passage d'air sont configurés sous forme de rainures (4) s'entrecoupant,
et au moins un moyen de retenue configuré en ventouse pour immobiliser l'élément de serrage contre la pièce (11),
sachant qu'est prévu un raccord d'aspiration (7) raccordable à une pompe à vide de sorte qu'en partant du raccord d'aspiration (7) et en passant par les canaux de passage d'air il est possible de créer une dépression dans une zone dite de retenue (8) appliquant contre la pièce (11),
sachant que la zone de retenue (8) est délimitée au moyen d'un joint (9) qui ceinture la zone de retenue (8) et délimite la propagation du vide, et qui s'étend au moins jusqu'à la surface de contact applicable contre la pièce (11).

2. Dispositif selon la revendication 1, **caractérisé en ce que** le joint (9) est configuré en plusieurs parties et présente un joint périmétrique en bordure (9a) qui délimite circonférentiellement la zone de retenue (8) ainsi qu'un joint surfacique (9b) prévu contre la surface de contact de la couche de contact (3) et qui s'étend au moins jusqu'au joint en bordure (9a).

3. Dispositif selon la revendication 2, **caractérisé en ce que** le joint surfacique (9b) recouvre de manière étanche à l'air la surface de contact de la couche de contact (3) en dehors de la pièce (11).

4. Dispositif selon la revendication 1, **caractérisé en ce que** la couche intermédiaire (6) présente un grand nombre de cavités.

5. Dispositif selon la revendication 4, **caractérisé en ce que** les cavités sont configurées à pores fermés.

6. Dispositif selon l'une des revendications précédentes, **caractérisé par** une couche ferromagnétique.

7. Dispositif selon la revendication 6, **caractérisé en ce que** la couche de contact (3) est configurée ferromagnétique.

8. Dispositif selon la revendication 1, **caractérisé en ce que** les rainures (4) s'étendent jusqu'à la couche dorsale (2) à travers la couche intercalaire (6).

9. Dispositif selon l'une des revendications précédentes, **caractérisé par** une table de serrage équipée de plusieurs actionneurs réglables en hauteur,
sachant que la plaque de serrage (1) applique contre les actionneurs et est retenue contre les actionneurs,
et sachant que les actionneurs sont réglables individuellement en hauteur, de sorte que les actionneurs puissent être orientés conformément au contour de consigne de la pièce (11).

10. Procédé pour retenir une pièce, **caractérisé en ce qu**'un dispositif (1) selon l'une des revendications 1 à 8 est appliqué par sa couche dorsale (2) contre une majorité d'actionneurs d'une table de serrage, en ce que le contour de consigne de la pièce (11) est orienté conformément aux actionneurs,
et en ce que la pièce (11) est appliquée contre la surface contact (3) de la plaque de serrage (1) et est retenue par les moyens de retenue du dispositif.

11. Procédé pour retenir une pièce, sachant que l'on adapte un dispositif selon l'une des revendications 1 à 8 au contour de la pièce (11) et l'applique contre la pièce (11), et qu'il est maintenu contre la pièce (11) à l'aide des moyens de retenue,
et qu'ensuite la pièce (11) et le dispositif sont maniés conjointement, et que la pièce (11) est transportée conjointement avec le dispositif (1)..

12. Procédé pour usiner une pièce, **caractérisé en ce que** l'on relie la pièce (11) à l'aide d'un dispositif configuré selon la revendication 6 ou 7, et **en ce que** l'épaisseur de couche de la pièce (11) est déterminée par mesure aux ultrasons sur une zone à usiner, sachant que la couche ferromagnétique de la plaque de serrage (1) sert de couche réfléchissant les ultrasons.
